# EUROPEAN PATENT SPECIFICATION

(11) **EP 3 958 396 B1**
(45) Date of publication and mention of the grant of the patent: **14.09.2022**
(21) Application number: 21185404.7
(22) Date of filing: 13.07.2021
(51) Int. Cl.: H01Q 1/28, H01Q 3/40, H01Q 5/40, H01Q 9/04, H01Q 15/06

(54) **MULTI-SYSTEM MULTI-BAND ANTENNA ASSEMBLY WITH ROTMAN LENS**
MEHRSYSTEM-MEHRBAND-ANTENNENANORDNUNG MIT ROTMAN-LINSE
ENSEMBLE ANTENNE MULTI-SYSTÈME MULTI-BANDE COMPRENANT UNE LENTILLE DE ROTMAN

(30) Priority: 18.08.2020 US 202063067151 P
(43) Date of publication of application: 23.02.2022
(73) Proprietor: The Boeing Company, Chicago, IL 60606-1596 (US)
(72) Inventor: ZHANG, HENRY Z., Chicago, 60606 (US); DE VIVERO, GUILLERMO H., Chicago, 60606 (US); KUMAR, ANIL, Chicago, 60606 (US); ELLIS, DANIEL J., Chicago, 60606 (US)
(74) Representative: Bugnion S.p.A. - US1

(56) References cited:
- US-A1- 2014 327 577
- US-B1- 9 391 375

## Description

### BACKGROUND

### 1. Field

The subject disclosure relates to systems and methods for communicating information via antennas, and in particular on a system of multi-band antennas.

### 2. Description of the Related Art

Existing wireless communication systems deploy their own antenna for a single band for an omni-directional coverage area. Multiple systems need to deploy multiple antennas for the specified band and coverage. Configuration of the multiple antennas requires a large surface area. It competes for the extremely valuable real estate with other systems in a vehicle with limited surface area. In addition, the congested antenna farm raises interference with other installed systems onboard. The multiple antennas also add to the weight and aerodynamic drag of the vehicle, negatively.

US 2014/327577 A1 discloses a high gain multi-beam aircraft blade antenna of an air-to-ground antenna systems includes multiple columnar matrix antenna elements housed within a blade. US 9 391 375 B1 discloses a 2×4 array of sub-arrays each having four single-fed, single-slot coupled microstrip patch antenna elements with the two feed lines of each sub-array connected to a Rotman lens beamforming system.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter which is defined only by the appended claims.

To address the requirements described above, this document discloses a multi-band integrated antenna assembly. In all embodiments, the assembly comprises a blade antenna for communicating a first signal, a planar antenna array for communicating a second signal, and a signal processor.

The planar antenna array comprises an array of antenna elements, and a Rotman lens using the blade antenna as a conductive ground plane. The array of antenna elements comprises a plurality antenna elements arranged in rows.

The Rotman lens has a set of Rotman lens array ports and set of Rotman lens beam ports. Each element of a respective row of the antenna elements is communicatively coupled to a respective one port of the set of Rotman lens array ports.

The signal processor comprises a set of signal processor first ports, each signal processor first port communicatively coupled to a respective one of the Rotman lens beam ports, and a second signal processor port for communicating a second signal. The signal processor selectively couples the second signal processor port to one of the signal processor first ports.

Some embodiments are evidenced by a method of communicating one or more RF signals using the blade antenna, and the planar antenna array and optionally, doing so concurrently.

The foregoing integrated antenna assembly supports multiple wireless systems and a wide range of frequency bands. The integrated antenna assembly comprises an omnidirectional blade antenna and one or more antenna arrays on the sides of the assembly. The antenna arrays on the side cover the entire horizontal range (360 degrees azimuth angle), and the blade antenna simultaneously provides typical omnidirectional radiation coverage for the same or different frequency bands, and can be replaced with a panel housing multiple monopole antennas for multiple input multiple output (MIMO) operation.

The foregoing system supports communications in LTE/5G-sub6 and mm Wave bands with a single antenna assembly, reduction in spatial volume needs (including stay-out zones for equipment retention, accessibility, and maintainability), reduction in vehicle weight by eliminating multiple antennas, support of next generation of antenna communication and control (e.g. electronically steered, beam forming), and lower cost by removing the phased array control electrical circuitry.

### BRIEF DESCRIPTION OF THE DRAWINGS

Referring now to the drawings in which like reference numbers represent corresponding parts throughout:
FIG. 1A is a diagram of a communication system;
FIG. 1B is a diagram depicting a typical antenna arrangement used to communicate signals;
FIGs. 2A-2B are a functional block diagrams of an exemplary embodiment of an integrated of antenna assembly;
FIG. 3A is a diagram illustrating a diagram depicting further details of the integrated antenna assembly presented in FIG. 2A;
FIG. 3B is a diagram illustrating a diagram depicting further details of the integrated antenna assembly presented in FIG. 2B;
FIGs. 3C and 3D are diagrams of a multi-layer substrate used to implement an embodiment of the integrated antenna assembly;
FIG. 3E is a diagram of a single-layer substrate used to implement an embodiment of the integrated antenna assembly;
FIGs. 4A-4D are diagrams depicting exemplary antenna modules that use multiple integrated antenna assemblies within a single housing;
FIGs. 5 and 6 are diagrams depicting the use of multiple integrated antenna assemblies within a single housing;
FIGs. 7A and 7B are diagrams illustrating use cases for communicating RF signals;
FIGs. 8 and 9 are diagrams illustrating a method of communicating one or more RF signals using the integrated antenna assemblies; and
FIG. 10 illustrates an exemplary computer system that could be used to implement processing elements of the above disclosure.

### DESCRIPTION

In the following description, reference is made to the accompanying drawings which form a part hereof, and which is shown, by way of illustration, several embodiments. It is understood that other embodiments may be utilized and structural changes may be made without departing from the scope of the subject disclosure which is defined in the appended claims.

### Overview

The systems and methods disclosed herein consolidates multiple antennas and antenna arrays for multiple systems having multiple use cases into one single antenna assembly. It provides omnidirectional coverage for the lower frequency band, such as 4G/long term evolution (LTE) / Fifth Generation (5G)-sub 6 GHz band (below 6 GHz), and directional beam coverage for the higher frequency bands, such as 5G-millimeter wave (mm Wave) bands from 7GHz to 86 GHz, or X, Ku, K, Ka and V frequency bands, simultaneously. It addresses installation, operational, performance and maintainability challenges inherent with deploying multiple wireless communication systems in a constrained environment such as an air, terrestrial, maritime or space vehicle. The compact physical size of the assembly reduces the installation limitations caused by finite installation surface area and the resulting co-site restriction, and weight and aerodynamic drag on the vehicle. The assembly with antenna arrays solves the concerns of insufficient antenna gain for the higher frequency band. The assembly with antenna arrays also solves the electrical performance concerns such as lack of electrical scanning capability, inability for spatial multiplex and limited connectivity link range. The single assembly solves the maintainability challenges such as maintenance and replacement costs for multiple antennas.

The assembly combines one or more blade antenna (for example, for LTE/5G-sub 6 GHz cellular communication) with one or more phased array antennas (for example, for 5G millimeter wave cellular/satellite communication). The blade antenna operate in a lower frequency band while the antenna arrays operate in a higher frequency band. The assembly is compact, provides 360° coverage, and addresses the concerns of limited real estate, weight and aerodynamic drag in vehicles traveling in constrained environments, including air, terrestrial, or maritime. The assembly simplifies vehicle design and manufacture while also reducing overall weight. The assembly can also be used in other applications having physically constrained environments such as aerospace, automotive, and/or maritime.

The antenna assembly also makes use of a Rotman lens to provide signals to each of the phased array antennas. The Rotman lens is used for beam scanning. This permits expensive and fragile phased array control beams scanning circuitry that would otherwise be disposed within the antenna assembly itself (and exposed to harsh environments such as extremely high and low temperatures) to be largely eliminated or disposed within an interior volume of the vehicle to which the assembly is mounted. Mounting the phased array controls circuitry within the vehicle also increases the reliability of such control circuitry, permitting fewer inspections, less maintenance, and a reduced need for spare parts. In one embodiment the array of radiation elements with the Rotman lens is disposed on a large ground plane that operates as a blade antenna. The phased array antennas provide 360 degree azimuthal directional beam coverage at higher frequency bands while the large ground plane (operating as a blade antenna) concurrently provides omnidirectional radiation coverage for the same and/or different frequency bands.

This antenna assembly provides, within a single housing, a plurality of antenna arrays that cover the entire horizontal range (360 degrees in azimuth) in 5G-mmWave frequency bands, and multiple ground planes, operating as multiple blade antennas which provide MIMO operation for lower frequency bands, such as 4G/LTE or 5G-sub6 cellular standard compliant frequency bands. The antenna assembly can be raised by an extension portion to reduce the size of the base and improve radiation coverage.

### Typical Communication System

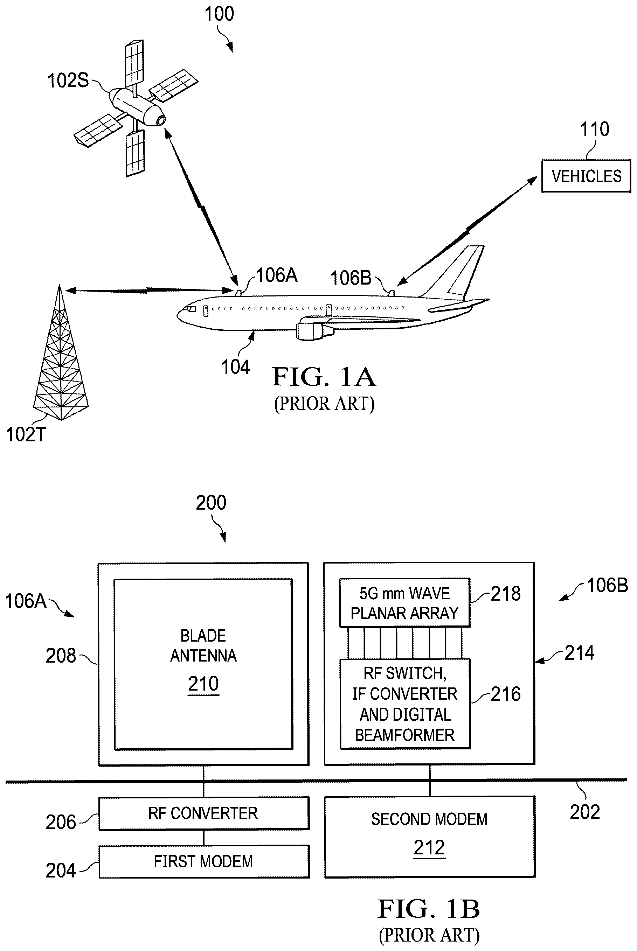

FIG. 1A is a diagram of a typical communication system 100. The communication system comprises a vehicle 104 such as an aircraft having a fuselage and wings attached thereto, and transceivers 102, which can include one or more of a terrestrial transceiver 102T and an airborne or satellite transceiver 102S and other vehicles 110, including communication with other vehicles 110 equipped with similar capabilities for communication. The vehicles 104 and 110 can be an aircraft, a water vessel, space vehicle, or a ground vessel.

The vehicle 104 includes one or more antenna systems 106A and 106B. The antenna systems 106A and 106B are used to communicate data that can include passenger or crew communication data (e.g. cellphone person-to-person communications, Internet communications via the passenger internet service provider (ISP) or an ISP provided by the vehicle 104), as well as avionics and/or cockpit data.

FIG. 1B is a diagram depicting a typical antenna arrangement 200 used to communicate signals. The antenna arrangement 200 comprises a first antenna system 106A for communicating in a first set of frequency bands such as those that support 4G/LTE or 5G sub-6 communications systems. The first antenna system 106A comprises a first modem 204 such as a 4G/LTE modem communicatively coupled to a radio frequency (RF) converter 206. The first modem 204 modulates outgoing signals for transmission, and provides the modulated signals to the communicatively coupled RF converter 206, which converts the modulator signals to the RF frequencies used for transmission by the blade antenna 210 communicatively coupled thereto. The blade antenna 210 receives incoming signals, and provides those incoming signals to the RF converter 206 four down conversion to frequencies suitable for the first modem 204. The first modem 204 then modulates the signals from the RF converter 206. The blade antenna 210 is typically a simple metal plane, provides omnidirectional reception and transmission of signals, and is disposed in a first antenna system housing 208.

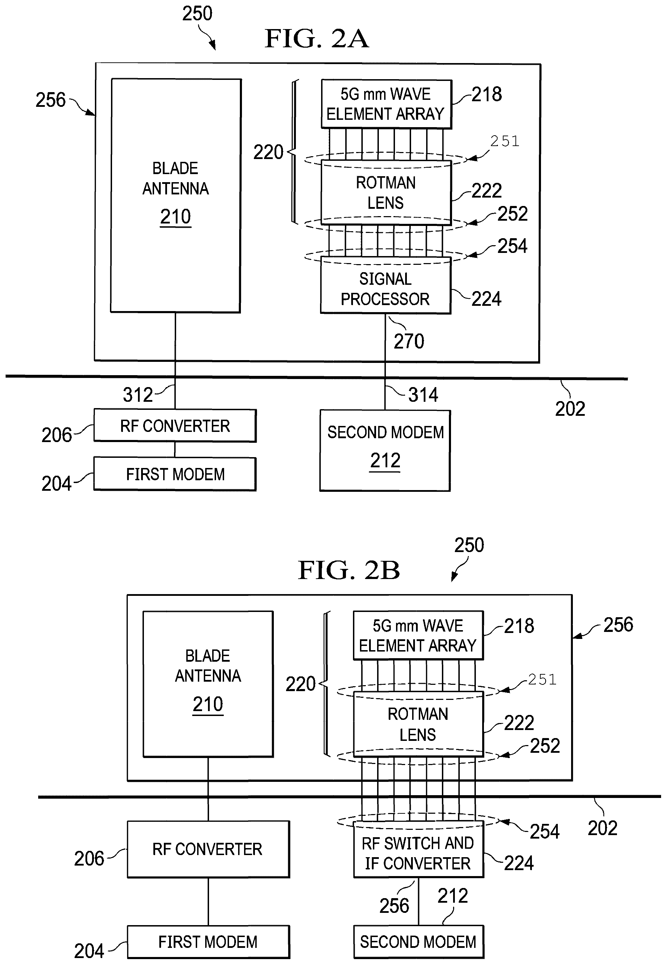

The antenna arrangement 200 also comprises a second antenna system 106B for communicating in a second set of frequency bands such as those that support the 5G mm Wave communication systems. The second antenna system 106B comprises a second modem 212 (such as a 5G modem 212), communicatively coupled to a communication module 216. The 5G modem 212 modulates outgoing signals for transmission, and demodulates incoming signals for reception. The communication module 216 performs intermediate frequency (IF) conversion to and from RF frequencies, RF switching, and digital beam forming functions. The communication module 216 is communicatively coupled to a planar array 218, described further below. As illustrated in FIG. 2, the planar array 218 and the communication module 216 are disposed in a second antenna assembly housing 214.

As illustrated in FIG. 1B, the first antenna system 106A and the second antenna system 106B are formed by separate structures, and are disposed in separate housings 208 and 214. Hence, the first antenna system 106A and the second antenna system 106B do not form an integrated structure. The first antenna system 106A and the second antenna system 106B are typically disposed a considerable distance from one another, as illustrated in FIG. 1.

FIG. 1B also discloses that the RF converter 206 and the first modem 204 of the first antenna system 106A and the second modem 212 of second antenna system 106B is disposed on opposing side of the vehicle exterior surface or skin 202 from the first antenna system housing 208 and the second antenna assembly housing 214. Since the communication module 216 is disposed external to the vehicle, it is exposed to temperature and pressure extremes.

### Integrated Antenna Assembly

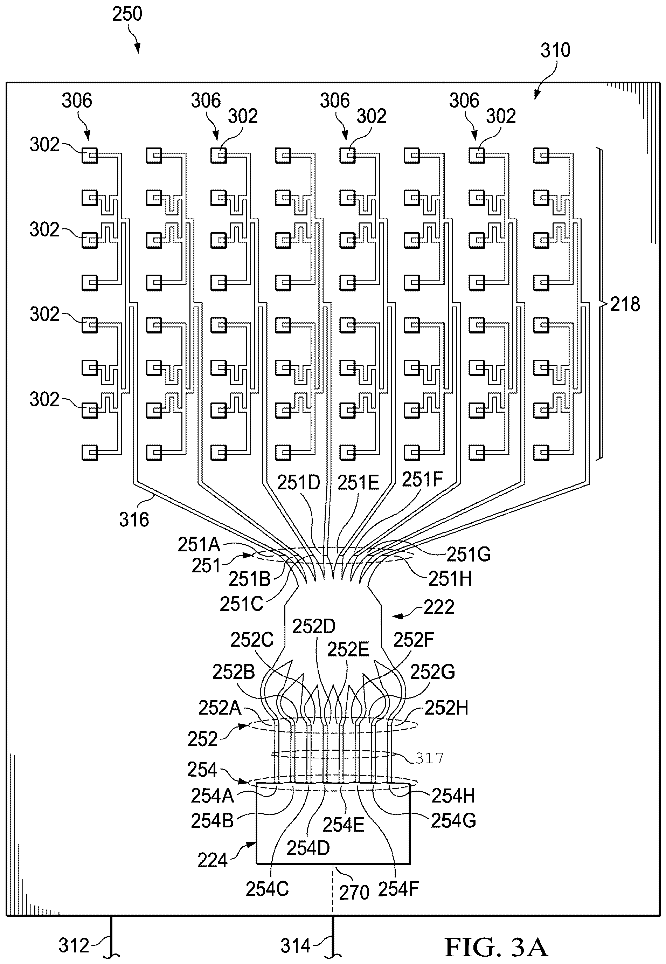

FIGs. 2A-2B are functional block diagrams of an exemplary embodiment of an integrated of antenna assembly (IAA) 250. FIG. 2A is discussed with reference to FIG. 3A, which is a diagram illustrating further details of the IAA 250.

The IAA 250 comprises the blade antenna 210, a planar antenna array 220, and a signal processor 224 (e.g., comprising an RF switch and IF converter). In one aspect, the blade antenna 210 is formed by conductive ground plane 310, for example by a conductive layer of a circuit board or a substrate having a conductive material in the desired shape of the ground plane 310. The blade antenna 210 communicates a first signal provided by a communicatively coupled RF converter 206 and first modem 204 by conductor 312.

The planar antenna array 220 communicates signals from a communicatively coupled second modem 212, and comprises an array 218 of antenna elements 302 arranged in rows 306. The antenna elements 302 can be formed by conductive surfaces on the top layer of the circuit board. In some examples, the first modem 204 can be used for 4G/LTE (fourth generation/long term evolution) communication, and the second modem 212 used for 5G or future network communication.

### Rotman Lens

The planar antenna array 220 also comprises a Rotman lens 222. The Rotman lens 222 is a passive microwave lens-based beamforming system that passively transforms a signal presented at one of the Rotman lens beam ports 252A-252H from a first phase and first amplitude to another signal at one or more of the Rotman lens array ports 251A-251H having a second phase and a second amplitude. The Rotman lens 222 also phase and amplitude shifts signals presented at the Rotman lens array ports 251A-251H and applies those phase and amplitude shifted signals to the Rotman lens beam ports 252A-252H.

Rotman lenses 222 use the free-space wavelength of a signal injected into a geometrically configured waveguide to passively shift the phase of inputs into a linear antenna array in order to scan a beam in any desired signal pattern. It has a shape and appropriate length transmission lines in order to produce a wave-front across the output that is phased by the time-delay in the signal transmission. The Rotman lens 222 achieves beam scanning using equivalent time delays that are created by the different path lengths to the radiating elements.

These lengths depend on the relative position between the beam ports 252A-252H and the array ports 251A-251H on the structure. As long as the path lengths exhibit constant time-delay behavior over the bandwidth, the lens is insensitive to the beam squint problems exhibited by constant phase beamformers. Each input port will produce a distinct beam that is shifted in angle at the system output.

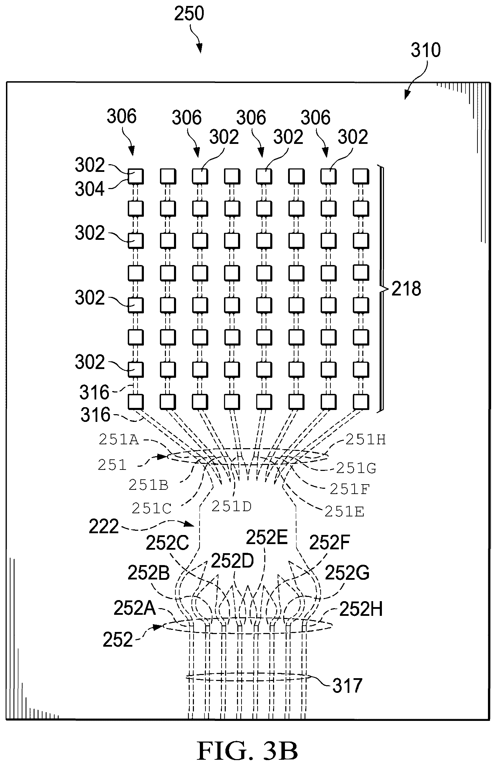

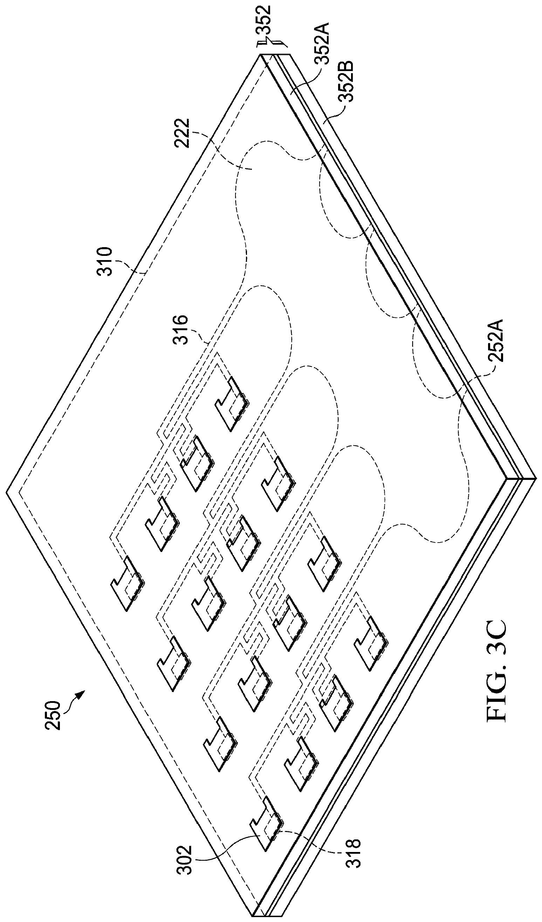

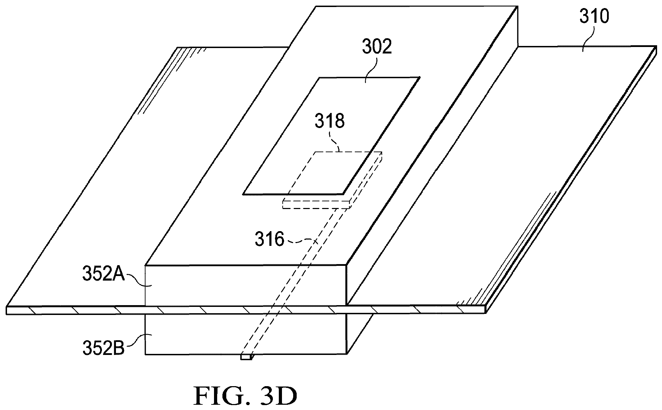

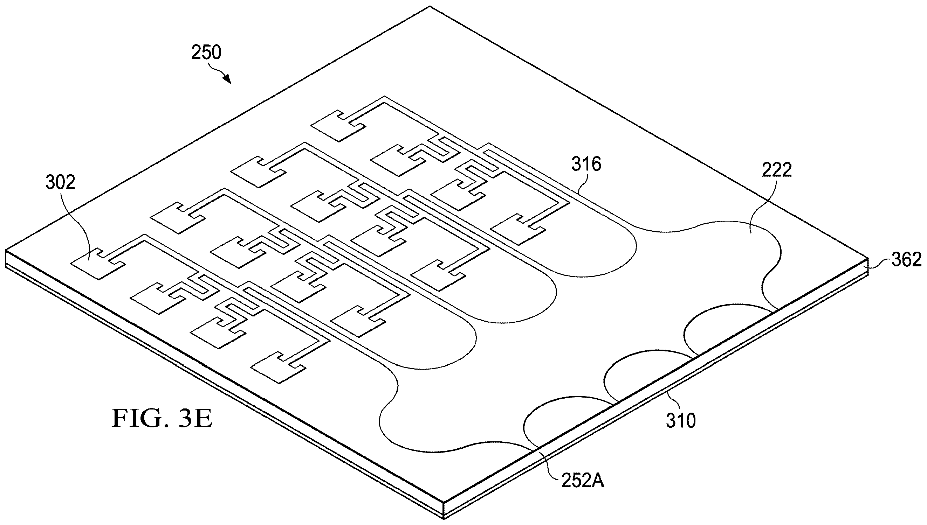

The design of the Rotman lens 222 is determined by a series of equations that set the focal points and array positions. The inputs, during the design of the system, include the desired number of beams and array elements and the spacing of the elements. In the embodiment shown in FIG. 3, the Rotman lens 222 comprises eight beam ports 252A-252H and eight array ports 251A-251H, but a greater or fewer number of either beam ports or array ports 251A-251H can be implemented.

The Rotman lens 222 comprises a set 251 of Rotman lens array ports 251A-251H, and a set 252 of Rotman lens beam ports 252A-252H. Each of the Rotman lens array ports 251A-251H is communicatively coupled to a respective row 306 of the array 218 of antenna elements 302 by conductive traces 316 in a circuit board.

The planar antenna array 220 also comprises a signal processor 224. The signal processor 224 includes a set 254 of signal processor first ports 254A-254H, with each of the signal processor first ports 254A-254H communicatively coupled to a respective one of the Rotman lens beam ports 252A-252H via conductive traces 317, thus forming microstrip feeds. The signal processor 224 also includes a second port 270 for communicating the second signal to and from the second modem 212. The signal processor 224 operates as a switch, and selectively couples the second port 270 to one of the processor first ports 254A-254H, according to the beam that is to be formed. The digital beam forming functionality of the communications module 216 of FIG. 2A is performed by Rotman lens 222, with the remaining functionality (RF switching and optionally IF conversion) performed by signal processor 224.

FIG. 3C is a diagram of the IAA 250 fashioned from a multi-layer substrate 352. The multi-layer substrate 352 comprises a top layer 352A or top substrate and a bottom layer 352B or bottom substrate. Antenna elements 302 are disposed on a top surface of the top layer 352A, and the conductive ground plane 310 is disposed between the top layer 352A and the bottom layer 352B, either on a top surface of the bottom layer 352B or a bottom surface of the top layer 352A. The Rotman lens 222, and circuit traces 316 interconnecting the signal processor 224, and the Rotman lens 222 are disposed on the bottom surface of the bottom layer 352B. The conductive ground plane 310 comprises apertures 318 disposed beneath the antenna elements 302, coupling the microstrips 316 to the antenna elements 302.

FIG. 3D is a diagram further illustrating the structure of the multi-layer circuit board or substrate in the region of the antenna elements 302. As shown in FIG. 3C, the Rotman lens 222, and circuit traces 316 interconnecting signal processor 224 and Rotman lens 222 are disposed on the bottom surface of the bottom layer 352B, and the conductive ground plane 310 is disposed between the top layer 352A and the bottom layer 352B. FIG. 3D further illustrates that the antenna elements 302 are coupled to the microstrip 316 via an aperture or slot 318 disposed in the ground plane and between each antenna element 302 and the microstrip 316.

In the embodiments illustrated in FIG. 2A and FIG. 3A, the signal processor 224 is disposed within the same housing 256 as the blade antenna 210. The signal processor 224 can also be disposed on the same circuit board having the conductive ground plane 310, as illustrated in FIG. 3A. The IAA 250 can also be implemented on a single layer circuit board, with the conductive ground plane 310 forming the blade antenna, with the Rotman lens 222, circuit traces 316, and processor 224 are disposed on the top of the substrate.

FIG. 3E is a diagram of exemplary embodiment of the IAA 250 using a single layer substrate 362 or circuit board structure. In this embodiment, the array elements 302, microstrip 316 and Rotman lens 222 are all disposed on one (e.g. top) side of the single layer substrate 362 and interconnecting together, while the conductive ground plane 310 is disposed on the other (e.g. bottom) side of the single substrate 362. Conductive elements on the top side and bottom side of the substrate are separated by a the layer of non-conductive material of the substrate 362.

FIG. 2B and FIG. 3B illustrate another embodiment of the IAA 250 in which the signal processor 224 is not disposed within the same housing 256 nor on the same circuit board as the conductive ground plane 310. In these embodiments, the signal processor 224 can be disposed within an interior volume of the vehicle 104. The circuit traces 316 of the embodiment shown in FIG. 3B and those that follow are analogous to those illustrated in FIG. 3A, but are illustrated as straight lines for purposes of minimizing the complexity of the drawing.

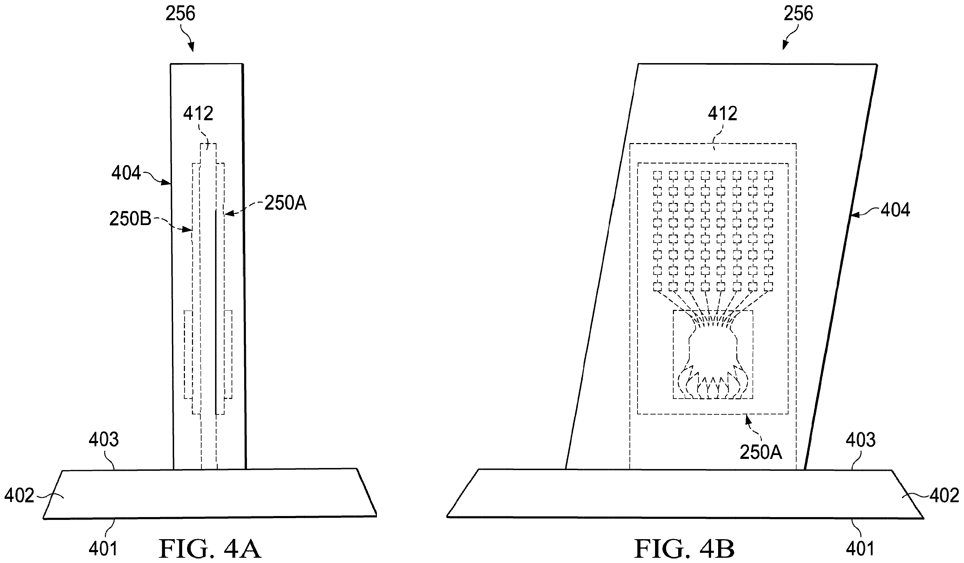

FIGs. 4A and 4B are diagrams depicting exemplary antenna housings 256 that use multiple IAAs 250 within a single housing 256 to collectively provide radiation beams of 360° in azimuth and up 180° in elevation. FIG. 4A presents a front view of the housing 256, while FIG. 4 B presents a side view of the housing 256. The first IAA 250A is mounted within the blade portion 404 on one side of a panel 412, and a second (or further) IAA 250B is mounted to the opposing side of panel 412. Panel 412 is mounted within housing 256, in the housing 256 is mounted to a top side 403 of the base 402. The bottom side 401 of the base 402 is adapted to be mounted to an external surface of the vehicle 104. In embodiments where the vehicle 104 has an outer skin 202 that is transparent to RF energy, the housing 256 can be mounted to an interior surface of the vehicle 104. The blade portion 404 is transparent for RF and microwave energy.

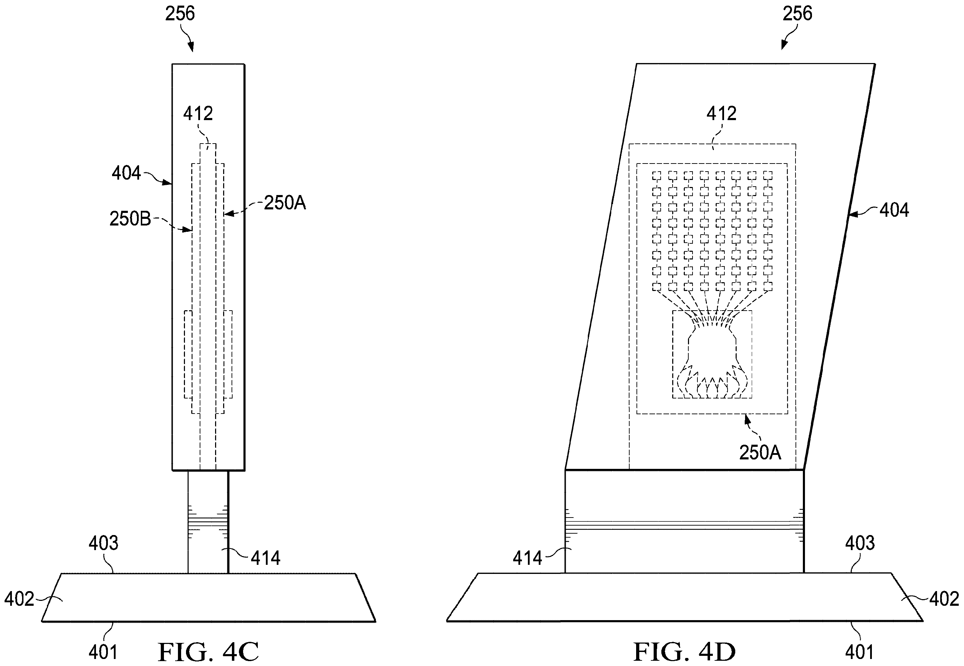

FIGs 4C and 4D are diagrams depicting an embodiment of the antenna housings 256 that further utilize an extension portion 414 disposed between the antenna housing 256 and the vehicle 104.

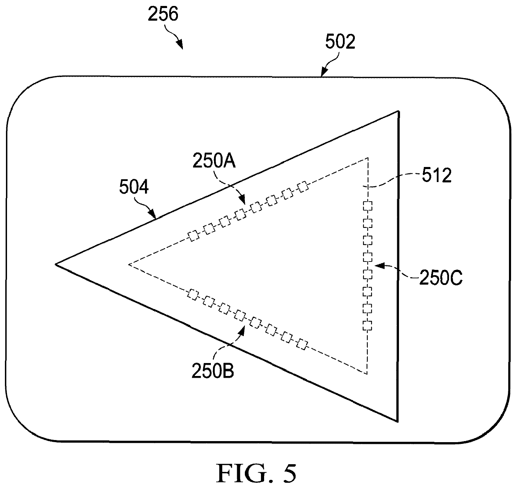

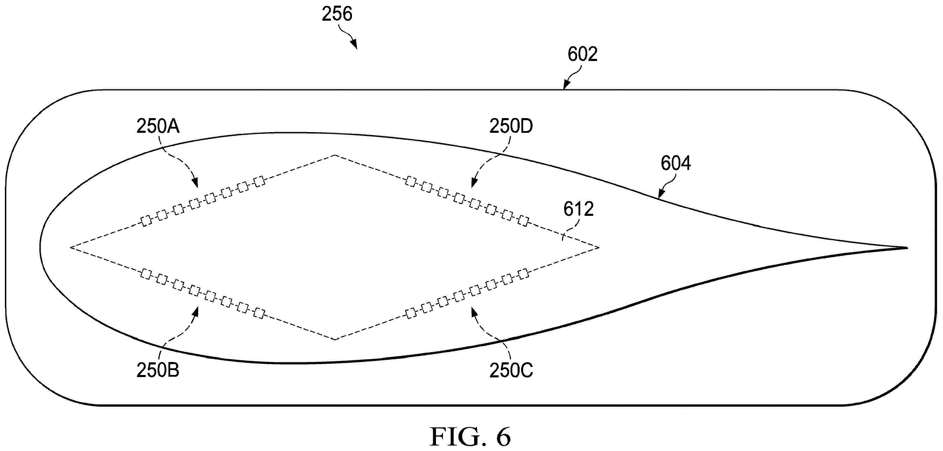

FIGs. 5 and 6 are diagrams depicting the use of multiple IAAs 250 within a single housing. These embodiments require smaller look angles for each of the IAAs 250 with in the housing. FIG. 5 depicts an embodiment using three IAAs 250A-250C, each IAA mounted on a side of a panel 512 that is triangular in cross section. Housing 504 surrounds panel 512, and is also a triangular in cross section. The housing 504 is disposed on base 502.

FIG. 6 depicts an embodiment using four IAAs 250A-250C, each IAA mounted on a side of a panel 512 that is trapezoidal in cross section. FIG. 6 also illustrates the use of an aerodynamic, tear drop shaped housing 604 to surround and protect panel 612. The housing 604 is disposed on base 602 similarly shaped housing can be used in any of the foregoing embodiments.

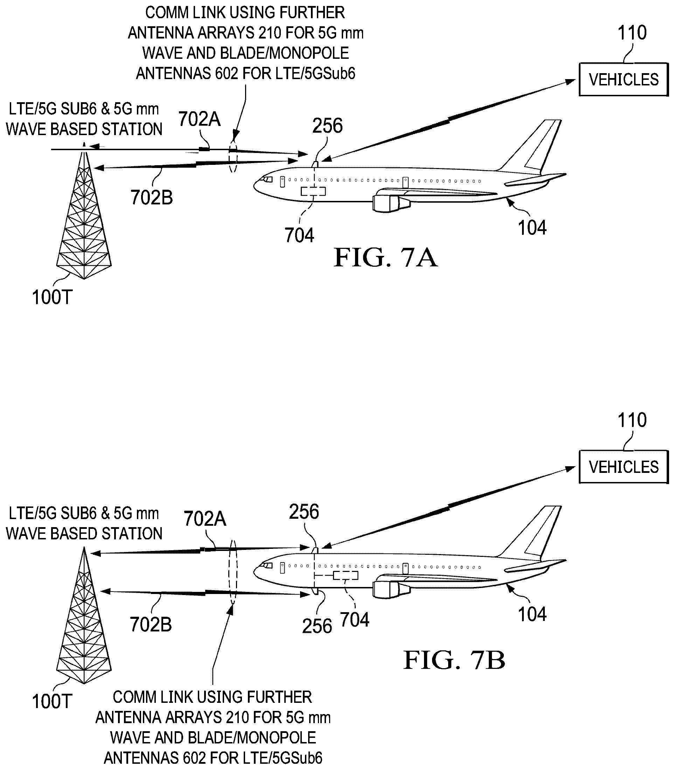

FIGs. 7A and 7B are diagrams illustrating use cases for communicating (transmitting or receiving) RF signals. FIG. 7A is a diagram illustrating a first use case in which a single integrated antenna is utilized, and FIG. 7B is a diagram illustrating a second use case in which two integrated antennas 256 are utilized. In both cases, a first RF signal 702A is communicated in LTE/5Gsub6 wavebands and protocols using the blade antenna 210 of the antenna housing 256. A second RF signal 702B is communicated in 5G mm wave wavebands and protocols using one or more of the planar antenna arrays 220 of the antenna housing 256. In the use case illustrated in FIG. 7B, communications processor 704 determines which of the planar antenna arrays 220 are to be used to communicate the second RF signal 702B, typically selecting the planar antenna array 220 most closely facing in the direction of the station 100T. As illustrated, multiple housings 256 can be utilized.

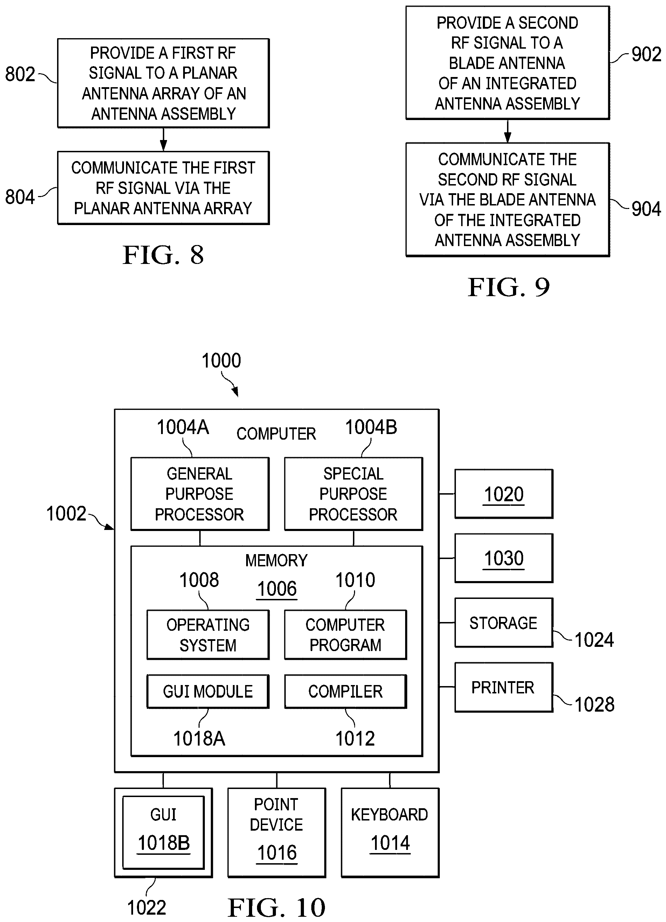

FIG. 8 is a diagram illustrating a method of communicating one or more RF signals using above-described IAAs 250. In block 802, a first RF signal 702A is provided to a planar antenna array of the IAA 250. In block 804 that first RF signal 702A is communicated via the planar antenna array.

FIG. 9 is a diagram illustrating a method of communicating one or more other RF signals using the above-described IAAs 250. In block 902, a second RF signal 702B is provided to a blade antenna 210 of the IAA 250. In block 904 the second RF signal is communicated via the blade antenna 210 of the IAA 250. The operations depicted in FIG. 9 can be performed concurrently with those of FIG. 8. Thus, the first RF signal 702A and the second RF signal 702B can be communicated at the same time.

### Hardware Environment

FIG. 10 illustrates an exemplary computer system 1000 that could be used to implement processing elements of the above disclosure, including the communications processor 704. The computer 1002 comprises a processor 1004 and a memory, such as random access memory (RAM) 1006. The computer 1002 is operatively coupled to a display 1022, which presents images such as windows to the user on a graphical user interface 1018B. The computer 1002 can be coupled to other devices, such as a keyboard 1014, a mouse device 1016, a printer 1028, etc. Of course, those skilled in the art will recognize that any combination of the above components, or any number of different components, peripherals, and other devices, can be used with the computer 1002.

Generally, the computer 1002 operates under control of an operating system 1008 stored in the memory 1006, and interfaces with the user to accept inputs and commands and to present results through a graphical user interface (GUI) module 1018A. Although the GUI module 1018B is depicted as a separate module, the instructions performing the GUI functions can be resident or distributed in the operating system 1008, the computer program 1010, or implemented with special purpose memory and processors. The computer 1002 also implements a compiler 1012 which allows an application program 1010 written in a programming language such as COBOL, C++, FORTRAN, or other language to be translated into processor 1004 readable code. After completion, the application 1010 accesses and manipulates data stored in the memory 1006 of the computer 1002 using the relationships and logic that was generated using the compiler 1012. The computer 1002 also optionally comprises an external communication device such as a modem, satellite link, Ethernet card, or other device for communicating with other computers.

In one embodiment, instructions implementing the operating system 1008, the computer program 1010, and the compiler 1012 are tangibly embodied in a computer-readable medium, e.g., data storage device 1020, which could include one or more fixed or removable data storage devices, such as a zip drive, floppy disc drive 1024, hard drive, CD-ROM drive, tape drive, etc. Further, the operating system 1008 and the computer program 1010 are comprised of instructions which, when read and executed by the computer 1002, causes the computer 1002 to perform the operations herein described. Computer program 1010 and/or operating instructions can also be tangibly embodied in memory 1006 and/or data communications devices 1030, thereby making a computer program product or article of manufacture. As such, the terms "article of manufacture," "program storage device" and "computer program product" as used herein are intended to encompass a computer program accessible from any computer readable device or media.

Those skilled in the art will recognize many modifications can be made to this configuration without departing from the scope of the subject disclosure. For example, those skilled in the art will recognize that any combination of the above components, or any number of different components, peripherals, and other devices, can be used.

### Conclusion

This concludes the description of the embodiments of the subject disclosure. The foregoing description of the embodiments has been presented for the purposes of illustration and description. It is not intended to be exhaustive or to limit the disclosure to the precise form disclosed. Many modifications and variations are possible in light of the above teaching. It is intended that the scope of rights be limited not by this detailed description, but rather by the claims appended hereto.

To the extent that terms "includes," "including," "has," "contains," and variants thereof are used herein, such terms are intended to be inclusive in a manner similar to the term "comprises" as an open transition word without precluding any additional or other elements.

## Claims

1. An antenna assembly (250), comprising:
a blade antenna (210) for communicating a first signal;
a planar antenna array (220) for communicating a second signal, the planar antenna array (220) comprising:
an array of antenna elements (302), the array of antenna elements (302) comprising a plurality antenna elements (302) arranged in rows (306) using the blade antenna (210) as a conductive ground plane;
a Rotman lens (222), formed by using the blade antenna (210) as the conductive ground plane, the Rotman lens (222) having a set of Rotman lens array ports (251) and a set of Rotman lens beam ports (252), each element of a respective row (306) of the antenna elements (302) communicatively coupled to a respective one port of the set of Rotman lens array ports (251);
a signal processor (224), having:
a set of signal processor first ports (254), each signal processor first port (254) communicatively coupled to a respective one of the set of Rotman lens beam ports (252);
a second signal processor port (270), the second signal processor port for communicating the second signal; and
wherein the signal processor (224) is configured to selectively couple the second signal processor port (270) to one or more of the signal processor first ports (254).

2. The antenna assembly (250) of claim 1, wherein:
the Rotman lens (222) is disposed on a first side of a substrate; and
the blade antenna (210) is formed by a conductive ground plane for the planar antenna array (220) on a second side of the substrate.

3. The antenna assembly (250) of claim 1 or 2, wherein:
the antenna assembly comprises a multi-layer substrate (352) comprising a first substrate and a second substrate;
the array of antenna elements (302) is disposed on a top side (352A) of the first substrate;
the blade antenna (210) is formed by a conductive ground plane (310) for the planar antenna array (220), disposed between the first substrate and the second substrate;
the Rotman lens (222) is disposed on a bottom side (352B) of the second substrate; and
each antenna element (302) of the respective row (306) of the antenna elements (302) is communicatively coupled to the respective ports of the set of Rotman lens array ports (251) via microstrip conductors (316) disposed on the bottom side (352B) of the second substrate and slots (318) disposed in the conductive ground plane (310) beneath each antenna element (302).

4. The antenna assembly (250) of any one of claims 1-3, further comprising:
an antenna housing (256) having a plurality of sides including a first side and a second side;
a further planar antenna array (220), for communicating the second signal, the further planar antenna array (220) comprising:
a further array of antenna elements (302), the further array of antenna elements (302) comprising a plurality of further antenna elements (302) arranged in further rows;
a further Rotman lens (222) having a set of further Rotman lens array ports (251) and a set of further Rotman lens beam ports (252), each element of a respective further row communicatively coupled to a respective one of further Rotman lens array ports (251);
wherein:
the planar antenna array (220) is mounted on the first side of the antenna housing (256);
the further planar antenna array (220) is mounted on the second side of the antenna housing (256);
the signal processor (224) comprises:
a set of signal processor further first ports (254), each signal processor further first port (254) communicatively coupled to a respective one of the set of further Rotman lens beam ports (252);
a second port (270), the second port for communicating the second signal; and
wherein the signal processor (224) is further configured to selectively couple the second port (270) to one or more of the signal processor further first ports (254); and
the signal processor (224) is mounted external to the antenna housing (256).

5. The antenna assembly (250) of claim 4, wherein:
the antenna housing (256) is mounted to an external surface of a vehicle and wherein the signal processor (224) is disposed within one of an interior volume of the vehicle or the antenna housing (256).

6. The antenna assembly (250) of claim 5, wherein:
the planar antenna array (220) and the further planar antenna array (220) are directed to collectively provide radiation beams of 360 degrees in azimuth and up to 180 degrees in elevation.

7. The antenna assembly (250) of claim 4, wherein:
the plurality of sides comprises at least one of:
a third side, the antenna housing (256) having a triangular cross section; and the third side comprises a third planar antenna array (220); or
a fourth side, the antenna housing (256) having a trapezoidal cross section; and
the fourth side comprises a fourth planar antenna array (220).

8. The antenna assembly (250) of any one of claims 1-7, wherein the Rotman lens (222) is configured to passively transform a further signal presented at a port of the set of Rotman lens ports from a first phase and first amplitude to one or more signals at one or more other ports of the set of Rotman lens ports having a second phase and second amplitude.

9. The antenna assembly (250) of any one of claims 1-8, wherein the first signal is in a first frequency band and the second signal is in a second frequency band higher than the first frequency band and optionally wherein the first frequency band is below 6 GHz and the second frequency band is 7 to 86 GHz or X, Ku, K, Ka and V-band.

10. The antenna assembly (250) of any one of claims 1-9, wherein the blade antenna (210) is formed by a conductive layer of a substrate.

11. The antenna assembly (250) of claim 10, wherein each row (306) of the antenna elements (302) is communicatively coupled to a respective one of the set of Rotman lens array ports (251) via a microstrip feed.

12. The antenna assembly (250) of claim 11, wherein:
each signal processor first port (254) is communicatively coupled to a respective one of the set of Rotman lens beam ports (252) by an associated second microstrip conductor.

13. A method of assembling an aircraft having a fuselage, comprising:
disposing an antenna assembly (250) on a skin of the fuselage, the antenna assembly (250), comprising:
a blade antenna (210) for communicating a first signal;
a planar antenna array (220) for communicating a second signal, the planar antenna array (220) comprising:
an array of antenna elements (302), the array of antenna elements (302) comprising a plurality antenna elements (302) arranged in rows (306) using the blade antenna (210) as a conductive ground plane;
a Rotman lens (222), formed by using the blade antenna (210) as the conductive ground plane, the Rotman lens (222) having a set of Rotman lens array ports (251) and a set of Rotman lens beam ports (252), each element of a respective row (306) of the antenna elements (302) communicatively coupled to a respective one port of the set of Rotman lens array ports (251);
a signal processor (224), having:
a set of signal processor first ports (254), each signal processor first port (254) communicatively coupled to a respective one of the set of Rotman lens beam ports (252);
a second signal processor port (270), the second signal processor port (270) for communicating the second signal; and
wherein the signal processor (224) selectively couples the second signal processor port (270) to one or more of the signal processor first ports (254) and the blade antenna (210) and the planar antenna array (220) are disposed on an opposing side of the skin from the signal processor (224).

14. The method claim 13, wherein:
the Rotman lens (222) is disposed on a first side of a substrate; and
the blade antenna (210) is formed by a conductive ground plane for the planar antenna array (220) on a second side of the substrate.

15. The method of claim 13 or 14, wherein:
the antenna assembly (250) comprises a multi-layer substrate (352) comprising a first substrate and a second substrate;
the array of antenna elements (302) is disposed on a top side (352A) of the first substrate;
the blade antenna (210) is formed by a conductive ground plane (310) for the planar antenna array (220),
disposed between the first substrate and the second substrate;
the Rotman lens (222) is disposed on a bottom side (352B) of the second substrate; and
each antenna element of the respective row of the antenna elements (302) is communicatively coupled to the respective ports of the set of Rotman lens array ports (251) via microstrip conductors (316) disposed on the bottom side (352B) of the second substrate and slots (318) disposed in the conductive ground plane (310) beneath each antenna element (302).

## Patentansprüche

1. Antennenbaugruppe (250), mit:
einer Blattantenne (210) zum Kommunizieren eines ersten Signals;
einer ebenen Antennenanordnung (220) zum Kommunizieren eines zweiten Signals, wobei die ebene Antennenanordnung (220) aufweist:
eine Anordnung von Antennenelementen (302), wobei die Anordnung von Antennenelementen (302) eine Mehrzahl von Antennenelementen (302) aufweist, die in Reihen (306) angeordnet sind, die die Blattantenne (210) als eine leitende Grundebene nutzen;
eine Rotmann-Linse (222), die durch Nutzen der Blattantenne (210) als die leitende Grundebene ausgebildet ist, wobei die Rotmann-Linse (222) einen Satz von Rotmann-Linsen-Anordnungsanschlüssen (251) und einen Satz von Rothmann-Linsen-Strahlanschlüssen (252) aufweist, wobei jedes Element einer jeweiligen Reihe (306) der Antennenelemente (302) kommunikativ mit einem jeweiligen Anschluss des Satzes von Rotmann-Linsen-Anordnungsanschlüssen (251) gekoppelt ist;
einem Signalprozessor (224), der aufweist:
einen Satz von ersten Signalprozessoranschlüssen (254), wobei jeder erste Signalprozessoranschluss (254) kommunikativ mit einem jeweiligen Satz von Rotmann-Linsen-Strahlanschlüssen (252) gekoppelt ist;
einen zweiten Signalprozessoranschluss (270), wobei der zweite Signalprozessoranschluss zum Kommunizieren des zweiten Signals ist; und
wobei der Signalprozessor (224) dazu konfiguriert ist, selektiv den zweiten Signalprozessoranschluss (270) mit ein oder mehreren der ersten Signalprozessoranschlüsse (254) zu koppeln.

2. Antennenbaugruppe (250) nach Anspruch 1, wobei:
die Rotmann-Linse (222) auf einer ersten Seite eines Strahls angeordnet ist;
die Blattantenne (210) durch eine leitende Grundebene für die ebene Antennenanordnung (220) auf einer zweiten Seite des Substrats ausgebildet ist.

3. Antennenbaugruppe (250) nach Anspruch 1 oder 2, wobei:
die Antennenbaugruppe ein Mehrschichtsubstrat (352) aufweist, das ein erstes Substrat und ein zweites Substrat aufweist;
die Anordnung von Antennenelementen (302) auf einer Oberseite (352a) des ersten Substrats angeordnet ist;
die Blattantenne (210) ausgebildet ist durch eine leitende Grundebene (310) für die ebene Antennenanordnung (220), angeordnet zwischen dem ersten Substrat und dem zweiten Substrat;
die Rotmann-Linse (222) auf einer Unterseite (352b) des zweiten Substrats angeordnet ist;
das Antennenelement (302) der jeweiligen Reihe (306) der Antennenelemente (302) kommunikativ mit dem jeweiligen Anschlusssatz von Rotmann-Linsen-Anordnungsanschlüssen (251) über Mikrostreifenleiter (316), die auf der Unterseite (352b) des zweiten Substrats angeordnet sind, und Schlitze (318) gekoppelt ist, die in der leitenden Grundebene (310) unterhalb jedes Antennenelements (302) angeordnet sind.

4. Antennenbaugruppe (250) nach einem der Ansprüche 1 bis 3, des Weiteren mit:
einem Antennengehäuse (256), das eine Mehrzahl von Seiten aufweist, die eine erste Seite und eine zweite Seite aufweisen;
einer weiteren ebenen Antennenanordnung (220) zum Kommunizieren des zweiten Signals, wobei die weitere ebene Antennenanordnung (220) aufweist:
eine weitere Anordnung von Antennenelementen (302), wobei die weitere Anordnung von Antennenelementen (302) eine Mehrzahl von weiteren Antennenelementen (302) aufweist, die in Reihen angeordnet sind;
eine weitere Rotmann-Linse (222), die einen Satz von weiteren Rotmann-Linsen-Anordnungsanschlüssen (251) und einen Satz von weiteren Rotmann-Linsen-Strahlanschlüssen (252) aufweist, wobei jedes Element einer jeweiligen weiteren Reihe kommunikativ mit einem jeweiligen weiteren der Rotmann-Linsen-Anordnungsanschlüssen (251) gekoppelt ist;
wobei:
die ebenen Antennenanordnung (220) auf der ersten Seite des Antennengehäuses (256) befestigt ist;
die weitere ebene Antennenanordnung (220) auf der zweiten Seite des Antennengehäuses (256) befestigt ist;
der Signalprozessor (224) aufweist:
einen Satz von weiteren ersten Signalprozessoranschlüssen (254), wobei jeder weitere erste Signalprozessoranschluss (254) kommunikativ mit einem jeweiligen des Satzes von weiteren Rothmann-Linsen-Strahlanschlüssen (252) gekoppelt ist;
einen zweiten Anschluss (270), wobei der zweite Anschluss zum Kommunizieren des zweiten Signals ist;
wobei der Signalprozessor (224) des Weiteren dazu konfiguriert ist, selektiv den zweiten Anschluss (270) mit einem oder mehreren der weiteren ersten Signalprozessoranschlüsse (254) zu koppeln; und
der Signalprozessor (224) extern von dem Antennengehäuse (256) befestigt ist.

5. Antennenbaugruppe (250) nach Anspruch 4, wobei:
das Antennengehäuse (256) auf einer externen Oberfläche eines Fahrzeugs befestigt ist und wobei der Signalprozessor (224) innerhalb von einem Innenvolumen des Fahrzeugs oder des Antennengehäuses (256) angeordnet ist.

6. Antennenbaugruppe (250) nach Anspruch 5, wobei:
die ebene Antennenanordnung (220) und die weitere ebene Antennenanordnung (220) ausgerichtet sind, um gemeinsam Strahlkegel von 360° im Azimuth und bis zu 180° in Elevation bereitzustellen.

7. Antennenbaugruppe (250) nach Anspruch 4, wobei:
die Mehrzahl von Seiten mindestens eines aufweist von:
einer dritten Seite, wobei das Antennengehäuse (256) einen dreieckigen Querschnitt aufweist;
die dritte Seite eine dritte ebene Antennenanordnung (220) aufweist; oder
eine vierte Seite, wobei das Antennengehäuse (256) einen trapezoiden Querschnitt aufweist; und
die vierte Seite eine vierte ebene Antennenanordnung (220) aufweist.

8. Antennenbaugruppe (250) nach einem der Ansprüche 1 bis 7, wobei die Rotmann-Linse (222) dazu konfiguriert ist, passiv ein weiteres Signal, das von einem Anschluss des Satzes von Rotmann-Linsen-Anschlüssen präsentiert ist, von einer ersten Phase einer ersten Amplitude zu einem oder mehreren Signalen an einem oder mehreren von anderen Anschlüssen von Rotmann-Linsen-Anschlüssen, die eine zweite Phase einer zweiten Amplitude aufweisen, zu transformieren.

9. Antennenbaugruppe (250) nach einem der Anschlüsse 1 bis 8, wobei das erste Signal eine Frequenz in einem ersten Frequenzband und das zweite Signal eine Frequenz höher als das erste Frequenzband ist und optional wobei das erste Frequenzband in einem Bereich von unterhalb 6 GHz ist und das zweite Frequenzband 7 bis 86 GHz oder X-, Ku-, K-, Ka- und V-Band ist.

10. Antennenbaugruppe (250) nach einem der Ansprüche 1 bis 9, wobei die Blattantenne (210) ausgebildet ist durch eine leitende Schicht eines Substrats.

11. Antennenbaugruppe (250) nach Anspruch 10, wobei jede Reihe (306) der Antennenelemente (302) kommunikativ mit einem jeweiligen des Satzes von Rotmann-Linsen-Anordnungsanschlüssen (241) über eine Mikrostreifenzuführung gekoppelt ist.

12. Antennenbaugruppe (250) nach Anspruch 11, wobei:
jeder erste Signalprozessoranschlüsse (254) kommunikativ gekoppelt ist mit einem jeweiligen des Satzes von Rotmann-Linsen-Strahlanschlüssen (252) durch einen zugeordneten zweiten Mikrostreifenleiter.

13. Verfahren zum Zusammenbauen eines Luftfahrzeugs, das aufweist:
Anordnen einer Antennenbaugruppe (250) an einer Außenhaut des Rumpfs, wobei die Antennenbaugruppe (250) aufweist:
eine Blattantenne (210) zum Dokumentieren des ersten Signals;
eine ebene Antennenanordnung (220) zum Dokumentieren eines zweiten Signals, wobei die ebene Antennenanordnung (220) aufweist:
eine Anordnung von Antennenelementen (302), wobei die Anordnung von Antennenelementen (302) eine Mehrzahl von Antennenelementen (302) aufweist, die in Reihen (306) angeordnet sind, unter Nutzung der Blattantenne (210) als eine leitende Grundebene;
eine Rotmann-Linse (222), die ausgebildet ist, durch Nutzen der Blattantenne (210) als die leitende Grundebene, wobei die Rotmann-Linse (222) einen Satz von Rotmann-Linsen-Anordnungsanschlüssen (251) und einen Satz von Rotmann-Linsen-Strahlanschlüssen (252) aufweist, wobei jedes Element einer jeweiligen Reihe (306) von Antennenelementen (302) kommunikativ mit einem jeweiligen Anschluss des Satzes von Rotmann-Linsen-Anordnungsanschlüssen (251) gekoppelt ist;
einen Signalprozessor (224), der aufweist:
einen Satz von ersten Signalprozessoranschlüssen (254), wobei jeder erste Signalprozessoranschluss (254) kommunikativ mit einem jeweiligen Satz von Rotmann-Linsen-Strahlanschlüssen (252) gekoppelt ist;
einem zweiten Signalprozessoranschluss (270), wobei der zweite Signalprozessoranschluss (270) zum Kommunizieren des zweiten Signals ist; und
wobei der Signalprozessor (224) selektiv mit dem zweiten Signalprozessoranschluss (270) und einem oder mehreren der Signalprozessoranschlüsse (254) gekoppelt ist und die Blattantenne (210) und die ebene Antennenanordnung (230) auf entgegengesetzten Seiten der Außenhaut von dem Signalprozessor (224) angeordnet sind.

14. Verfahren nach Anspruch 13, wobei:
die Rotmann-Linse (222) von der ersten Seite eines Substrats angeordnet ist; und
die Blattantenne (210) ausgebildet ist durch eine leitende Grundebene für die ebene Antennenanordnung (220) auf einer zweiten Seite des Substrats.

15. Verfahren nach Anspruch 13 oder 14, wobei:
die Antennenbaugruppe (250) ein Mehrschichtsubstrat (352) aufweist, das ein erstes Substrat und ein zweites Substrat aufweist;
die Anordnung von Antennenelementen (302) auf einer Oberseite (352A) des ersten Substrats angeordnet ist;
wobei die Blattantenne (210) durch eine leitende Grundebene (310) für die ebene Antennenanordnung (220) ausgebildet ist,
angeordnet zwischen dem ersten Substrat und dem zweiten Substrat;
die Rotmann-Linse (222) auf einer Unterseite (320b) des zweiten Substrats angeordnet ist; und
jedes Antennenelement der jeweiligen Reihe von Antennenelementen (302) kommunikativ gekoppelt ist mit den jeweiligen Anschlüssen des Satzes von Rotmann-Linsen-Anordnungsanschlüssen (251) über Mikrostreifenleiter (316), die auf der Unterseite (352b) des zweiten Substrats angeordnet sind, und Schlitze (318), die in der leitenden Grundebene (310) unterhalb jedes Antennenelements (302) angeordnet sind.

## Revendications

1. Ensemble antenne (250), comprenant :
une antenne lame (210) pour communiquer un premier signal ;
un réseau d'antennes planes (220) pour communiquer un second signal, le réseau d'antennes planes (220) comprenant :
un réseau d'éléments d'antenne (302), le réseau d'éléments d'antenne (302) comprenant une pluralité d'éléments d'antenne (302) agencés en rangées (306) utilisant l'antenne lame (210) comme étant un plan de masse conducteur ;
une lentille de Rotman (222), formée en utilisant l'antenne lame (210) comme étant le plan de masse conducteur, la lentille de Rotman (229) ayant un ensemble de ports de réseau de lentilles de Rotman (251) et un ensemble de ports de faisceau de lentilles de Rotman (252), chaque élément d'une rangée respective (306) des éléments d'antenne (302) étant couplé en communication à un port respectif de l'ensemble de ports de réseau de lentilles de Rotman (251) ;
un processeur de signal (224), ayant :
un ensemble de premiers ports de processeur de signal (254), chaque premier port de processeur de signal (254) étant couplé en communication à l'un respectif de l'ensemble de ports de faisceau de lentilles de Rotman (252) ;
un second port de processeur de signal (270), le second port de processeur de signal pour communiquer le second signal, et
dans lequel le processeur de signal (224) est configuré pour coupler sélectivement le second port de processeur de signal (270) à un ou plusieurs des premiers ports de processeur de signal (254).

2. Ensemble antenne (250) selon la revendication 1, dans lequel :
la lentille de Rotman (222) est disposée sur un premier côté d'un substrat ; et
l'antenne lame (210) est formée par un plan de masse conducteur pour le réseau d'antennes planes (220) sur un second côté du substrat.

3. Ensemble antenne (250) selon la revendication 1 ou 2, dans lequel :
l'ensemble antenne comprend un substrat multicouche (352) comprenant un premier substrat et un second substrat ;
le réseau d'éléments d'antenne (302) est disposé sur un côté supérieur (352A) du premier substrat ;
l'antenne lame (210) est formée par un plan de masse conducteur (310) pour le réseau d'antennes planes (220), disposé entre le premier substrat et le second substrat ;
la lentille de Rotman (222) est disposée sur un côté inférieur (352B) du second substrat ; et
chaque élément d'antenne (302) de la rangée respective (306) des éléments d'antenne (302) est couplé en communication aux ports respectifs de l'ensemble de ports de réseau de lentilles de Rotman (251) par l'intermédiaire de conducteurs à microruban (316) disposés sur le côté inférieur (352B) du second substrat et des fentes (318) disposées dans le plan de masse conducteur (310) sous chaque élément d'antenne (302).

4. Ensemble antenne (250) selon l'une quelconque des revendications 1 à 3, comprenant en outre :
un boîtier d'antenne (256) ayant une pluralité de côtés comportant un premier côté et un second côté ;
un autre réseau d'antennes planes (220), pour communiquer le second signal, l'autre réseau d'antennes planes (220) comprenant :
un autre réseau d'éléments d'antenne (302), l'autre réseau d'éléments d'antenne (302) comprenant une pluralité d'autres éléments d'antenne (302) agencés en autres rangées ;
une autre lentille de Rotman (222) ayant un ensemble d'autres ports de réseau de lentilles de Rotman (251) et un ensemble d'autres ports de faisceau de lentille de Rotman (252), chaque élément d'une autre rangée respective étant couplé en communication à l'un respectif d'autres ports de réseau de lentilles de Rotman (251) ;
dans lequel :
le réseau d'antennes planes (220) est monté sur le premier côté du boîtier d'antenne (256) ;
l'autre réseau d'antennes planes (220) est monté sur le second côté du boîtier d'antenne (256) ;
le processeur de signal (224) comprend :
un ensemble d'autres premiers ports de processeur de signal (254), chaque autre premier port de processeur de signal (254) étant couplé en communication à l'un respectif de l'ensemble d'autres ports de faisceau de lentille de Rotman (252) ;
un second port (270), le second port étant pour communiquer le second signal ; et
dans lequel le processeur de signal (224) est en outre configuré pour coupler sélectivement le second port (270) à un ou plusieurs des autres premiers ports de processeur de signal (254) ; et
le processeur de signal (224) est monté à l'extérieur du boîtier d'antenne (256).

5. Ensemble antenne (250) selon la revendication 4, dans lequel :
le boîtier d'antenne (256) est monté sur une surface externe d'un véhicule et dans lequel le processeur de signal (224) est disposé dans l'un d'un volume intérieur du véhicule ou du boîtier d'antenne (256).

6. Ensemble antenne (250) selon la revendication 5, dans lequel :
le réseau d'antennes planes (220) et l'autre réseau d'antennes planes (220) sont dirigés pour fournir collectivement des faisceaux de rayonnement de 360 degrés en azimut et jusqu'à 180 degrés en élévation.

7. Ensemble antenne (250) selon la revendication 4, dans lequel :
la pluralité de côtés comprend au moins l'un parmi :
un troisième côté, le boîtier d'antenne (256) ayant une section transversale triangulaire ; et le troisième côté comprend un troisième réseau d'antennes planes (220) ; ou
un quatrième côté, le boîtier d'antenne (256) ayant une section transversale trapézoïdale ; et le quatrième côté comprend un quatrième réseau d'antennes planes (220).

8. Ensemble antenne (250) selon l'une quelconque des revendications 1 à 7, dans lequel la lentille de Rotman (222) est configurée pour transformer passivement un autre signal présenté au niveau d'un port de l'ensemble de ports de lentilles de Rotman d'une première phase et d'une première amplitude en un ou plusieurs signaux au niveau d'un ou de plusieurs autres ports de l'ensemble de ports de lentilles de Rotman ayant une seconde phase et une seconde amplitude.

9. Ensemble antenne (250) selon l'une quelconque des revendications 1 à 8, dans lequel le premier signal est dans une première bande de fréquence et le second signal est dans une seconde bande de fréquence supérieure à la première bande de fréquence et éventuellement dans lequel la première bande de fréquence est inférieure à 6 GHz et la seconde bande de fréquence est de 7 à 86 GHz ou sur la bande X, Ku, K, Ka et V.

10. Ensemble antenne (250) selon l'une quelconque des revendications 1 à 9, dans lequel l'antenne lame (210) est formée par une couche conductrice d'un substrat.

11. Ensemble antenne (250) selon la revendication 10, dans lequel chaque rangée (306) des éléments d'antenne (302) est couplée en communication à l'un respectif de l'ensemble de ports de réseau de lentilles de Rotman (251) par l'intermédiaire d'une alimentation à microruban.

12. Ensemble antenne (250) selon la revendication 11, dans lequel :
chaque premier port de processeur de signal (254) est couplé en communication à l'un respectif de l'ensemble de ports de faisceau de lentilles de Rotman (252) par un second conducteur à microruban associé.

13. Procédé d'assemblage d'un aéronef ayant un fuselage, comprenant :
la disposition d'un ensemble antenne (250) sur une peau du fuselage, l'ensemble antenne (250), comprenant :
une antenne lame (210) pour communiquer un premier signal,
un réseau d'antennes planes (220) pour communiquer un second signal, le réseau d'antennes planes (220) comprenant :
un réseau d'éléments d'antenne (302), le réseau d'éléments d'antenne (302) comprenant une pluralité d'éléments d'antenne (302) agencés en rangées (306) en utilisant l'antenne lame (210) comme étant un plan de masse conducteur ;
une lentille de Rotman (222), formée en utilisant l'antenne lame (210) comme étant le plan de masse conducteur, la lentille de Rotman (222) ayant un ensemble de ports de réseau de lentilles de Rotman (251) et un ensemble de ports de faisceau de lentilles de Rotman (252), chaque élément d'une rangée respective (306) des éléments d'antenne (302) étant couplé en communication à un port respectif de l'ensemble de ports de réseau de lentilles de Rotman (251) ;
un processeur de signal (224), ayant :
un ensemble de premiers ports de processeur de signal (254), chaque premier port de processeur de signal (254) étant couplé en communication à l'un respectif de l'ensemble de ports de faisceau de lentilles de Rotman (252) ;
un second port de processeur de signal (270), le second port de processeur de signal (270) étant pour communiquer le second signal, et
dans lequel le processeur de signal (224) couple sélectivement le second port de processeur de signal (270) à un ou plusieurs des premiers ports de processeur de signal (254) et l'antenne lame (210) et le réseau d'antennes planes (220) sont disposés sur un côté opposé de la peau par rapport au processeur de signal (224).

14. Procédé selon la revendication 13, dans lequel :
la lentille de Rotman (222) est disposée sur un premier côté d'un substrat ; et
l'antenne lame (210) est formée par un plan de masse conducteur pour le réseau d'antennes planes (220) sur un second côté du substrat.

15. Procédé selon la revendication 13 ou 14, dans lequel :
l'ensemble antenne (250) comprend un substrat multicouche (352) comprenant un premier substrat et un second substrat ;
le réseau d'éléments d'antenne (302) est disposé sur un côté supérieur (352A) du premier substrat ;
l'antenne lame (210) est formée par un plan de masse conducteur (310) pour le réseau d'antennes planes (220), disposé entre le premier substrat et le second substrat ;
la lentille de Rotman (222) est disposée sur un côté inférieur (352B) du second substrat ; et
chaque élément d'antenne de la rangée respective des éléments d'antenne (302) est couplé en communication aux ports respectifs de l'ensemble de ports de réseau de lentilles de Rotman (251) par l'intermédiaire de conducteurs à microruban (316) disposés sur le côté inférieur (352B) du second substrat et des fentes (318) disposés dans le plan de masse conducteur (310) sous chaque élément d'antenne (302).
